Europäisches Patentamt

European Patent Office

Office européen des brevets

(11) Publication number: **0 149 325**
**A1**

(12) # EUROPEAN PATENT APPLICATION

(21) Application number: **84308336.1**

(22) Date of filing: **30.11.84**

(51) Int. Cl.⁴: **A 01 B 49/04**
A 01 D 43/12, A 01 D 91/00

(30) Priority: **30.12.83 GB 8334637**

(43) Date of publication of application:
**24.07.85 Bulletin 85/30**

(84) Designated Contracting States:
**DE FR GB**

(71) Applicant: **Whidborne, Ferris James**
**Park Farm Worldham**
**Alton Hants(GB)**

(72) Inventor: **Whidborne, Ferris James**
**Park Farm Worldham**
**Alton Hants(GB)**

(74) Representative: **Milhench, Howard Leslie**
**R.G.C. Jenkins & Co. 12-15, Fetter Lane**
**London EC4A 1PL(GB)**

(54) Stubble disposal apparatus.

(57) Agricultural apparatus for disposing unwanted straw, stubble or the like material comprises a collector (11) which mows or picks up the material, means for chopping the material down, a pneumatic conveyor (4) for delivering the chopped material to a subsoil tine (5) which continuously forms a slit or trench in the ground into which the material is continuously deposited, and a roller (6) which forcibly closes the slit or trench to bury the material.

FIG.2.

EP 0 149 325 A1

Croydon Printing Company Ltd.

STUBBLE DISPOSAL APPARATUS

This invention relates to agricultural apparatus for disposing of stubble, trash, maize stova or the like unwanted remains of vegetation whether rooted or lying loose (hereinafter referred to collectively as "stubble"), following harvesting.

After the harvesting of corn, maize, rape or other crops it is necessary to prepare the ground into a seed bed for the sowing of the subsequent crop. Firstly however it is necessary to dispose of the stubble of the previous crop left by the harvester. In the past this has been done in one of two ways. Firstly the ground can be ploughed in the normal way. This involves turning over the top soil to bury the stubble underneath, where it rots. This is effective, but cannot be used on certain grounds, for instance where the top soil layer is too thin and there is clay underneath where the soil has too high a clay content to permit subsequent cultivation into a seed bed. On such ground, the second method is used, which is the time-honoured practice of setting fire to the stubble to reduce it to ash which can then be tilled into the ground to make a seed bed. Although this burning has been practised for centuries, it has recently been the subject of much debate because of the undesirable side effects. Apart from the considerable smoke generated, there is the ever-present risk of fire in hedgerows, wooded land and even property, which has resulted in contemplated legislation to ban or at least to strictly curb stubble burning to a degree uneconomic to the average farmer. In the prospect therefore of stubble burning being regarded as anti-social or even being made illegal, the present invention has been conceived.

According to the invention there is provided a method of continuously disposing of stubble comprising the steps of collecting the stubble and chopping it continuously forming a slit or trench in the ground, and continuously depositing the chopped stubble in said slit or trench.

Viewed from another aspect the invention provides agricultural apparatus comprising a stubble collector, means for chopping the collected stubble, a plough or subsoiling means adapted to form a slit or trench in the ground, and stubble receiving and conveying means adapted to deposit the chopped stubble into said slit or trench.

In this way, by a continuous process, it is possible to remove the unwanted stubble and deposit it in a slit or trench where it will lie and eventually rot to become homogeneous with the soil. The smoke and fire problem mentioned above is solved, and there are a number of other substantial benefits as well:-

(1)   Means may be provided for adding nitrogenous or other rotting catalysts to the mowings resulting in their fast deterioration in the ground.

(2)   The mowings may be deposited fairly deeply so that the acetic acid produced by their rotting does not have a deleterious effect on the germination of seeds planted in the seed bed above.  Previously such acetic acid formation when the topsoil was cultivated meant that the sowing of new seed had to be delayed to allow the acid to dissipate.  Using the apparatus and method of the invention means that the seed can be sowed earlier with an attendant increase in cropping.

(3)   The stubble-filled channels left by the apparatus can act as drainage channels if there is a heavy clay subsoil.

(4)   The invention means that the combine harvester may be adjusted to leave a greater length of stubble with attendant improvement in efficiency, since (a) the ratio of head to stalk is increased, and (b) the higher from the ground the combine blades are set the less is the risk of soil, weeds and other matter being entrapped.  Thus the combine rate can be improved.

(5)   The apparatus can be adapted so that its constituent parts can be used independently.  That is, if the slit or trench forming means, which may take the form of one or more subsoil tines is removed, it can be used as a pasture topper.  On the other hand, if the mower is removed it can be used as a conventional subsoiler and for planting cabbages, trees, broccoli or the like given seating space for operatives.

(6)  Using a 110 BHP tractor, around 25 acres per day can be treated according to the invention, so the cost is comparable to that of ploughing - some £15 per acre at 1983 costs.  Therefore because of its other benefits the method of the invention may be preferred to ploughing even where the latter is feasible. However, if it is still desired for economic reasons to burn the stubble, the apparatus of the invention may still be used to create effective fire breaks, and subdivide a large field into smaller parcels.

(7)  The apparatus can follow a combine harvester and pick up the swath of straw left behind and, after chopping, deposit the stubble immediately into the slit or trench.

The following are preferred features of the invention:-

(1)   A pair of subsoiling means may be provided, one on either side of the apparatus.   The means may comprise subsoiling tines disposed at an angle to the vertical (preferably about 45° to form slits in the ground which can substantially close behind the machine under their own weight.

(2)   The receiving and conveying means may comprise one or more housings defining a passageway through which the chopped stubble is air-blown.   The or each passageway may terminate adjacent the respective plough or subsoiling means providing a vortex flow which delivers the chopped stubble into the slit or trench, the air blowing off in another direction.

(3)   Means may be provided for forcibly closing the slit or trench behind the apparatus.   Such closing means may comprise one or more pairs of inclined rollers mounted on a trailing axle to follow in registry with the or each plough or subsoiling means. Adjustment means may be provided to enable the rollers to act as a depth gauge.

In order that the invention may be more readily understood two embodiments thereof will now be described by way of example with reference to the accompanying drawings, in which:-

Figure 1 is a side view of apparatus according to the invention assembled to an agricultural tractor,

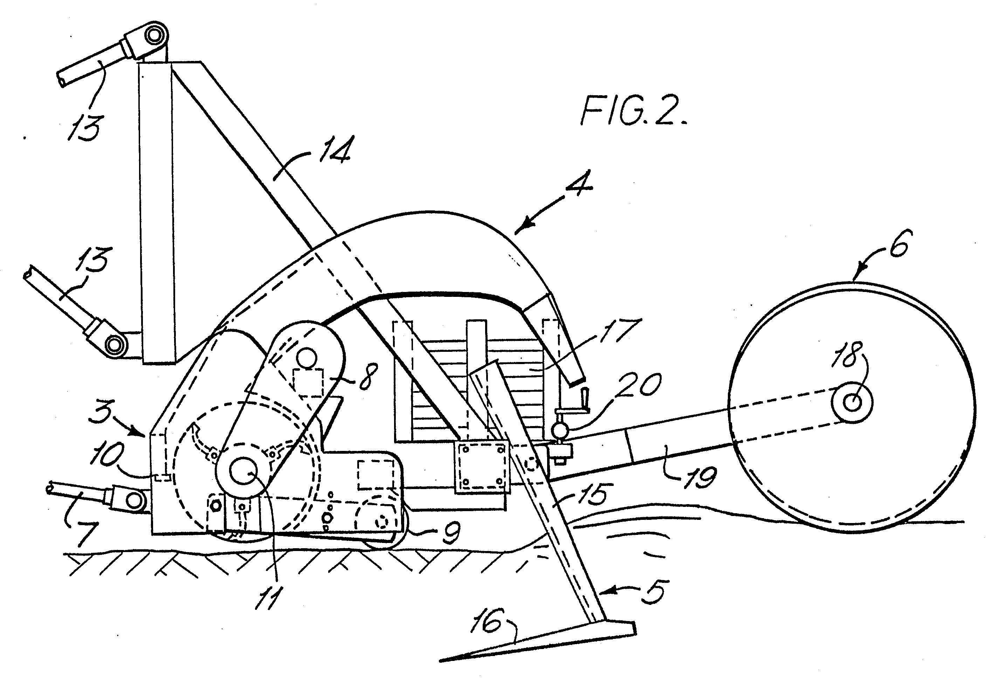

Figure 2 is a view of the apparatus to a larger scale,

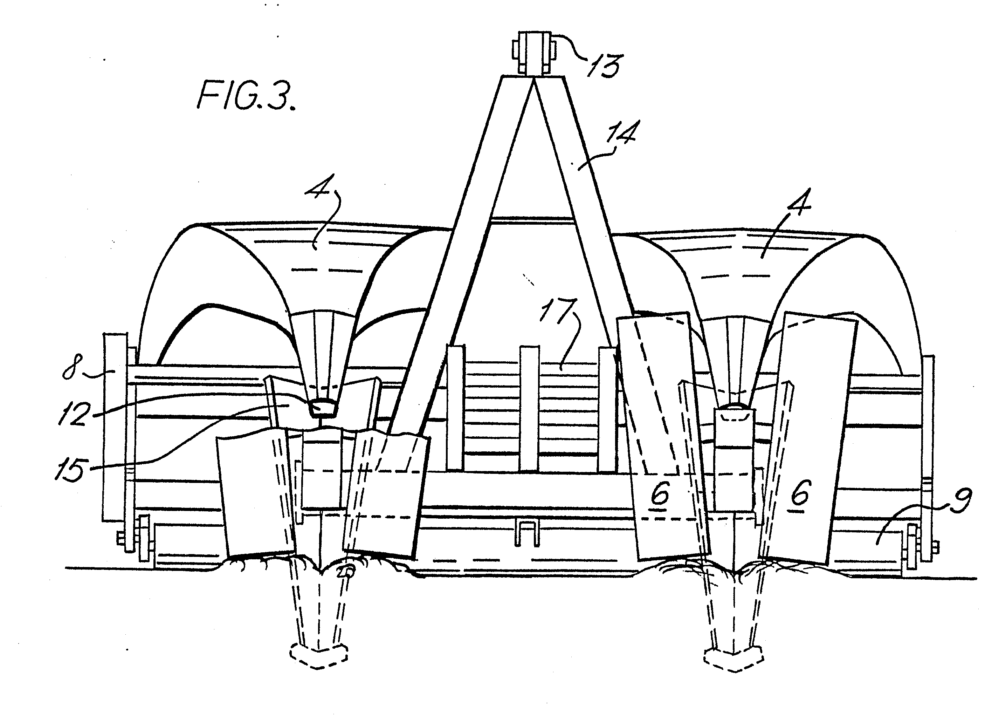

Figure 3 is a rear elevation, the tractor being omitted for clarity,

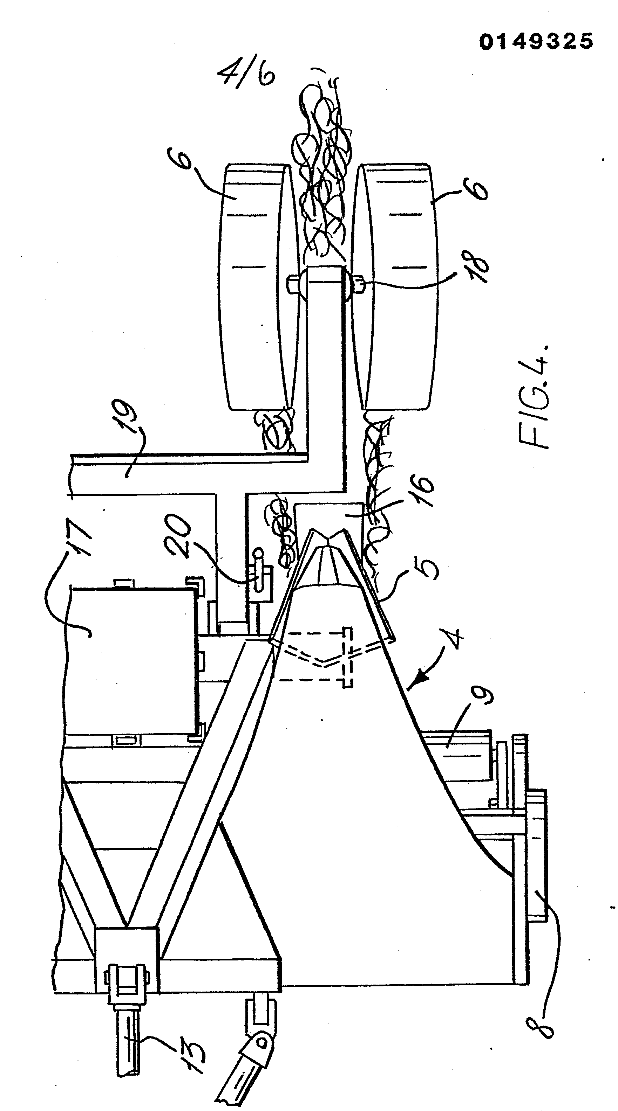

Figure 4 is a plan view of one side of the apparatus,

Figure 5 is a side view of a modified apparatus, and

Figure 6 is a rear view of the apparatus of Figure 5.

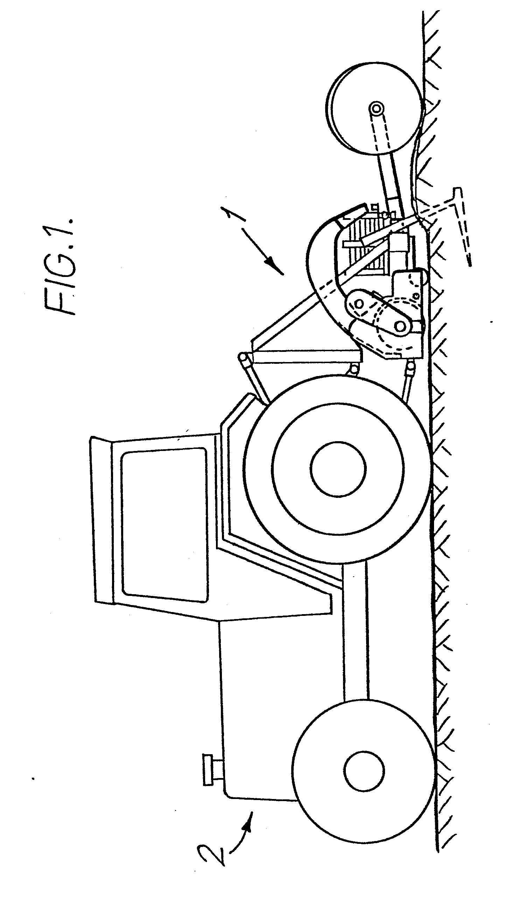

Figure 1 shows the apparatus generally designated 1 being towed by a convention tractor 2. The apparatus consists of a flail mower 3, two mowing-receiving and conveying chutes 4, two subsoil tines 5, and two pairs of slit-closing concrete rollers 6.

Describing the flail mower 3 first, this consists of an 8ft mower drawn by the tractor through linkages 7 and driven at some 2500 RPM by the power take off of the tractor by an endless belts (not shown) enclosed by guard 8. The depth of cut is adjusted by a depth gauge roller 9 by means of which the mower may be raised or lowered.

The mowings are chopped against cutter bar 10 and are then delivered into and through the cowling 4 by the force of wind generated by the rotating flail shaft assembly 11.

/

**0149325**

The two cowlings 4 are curved over the cutter and taper to a discharge port 12 whence the chopped cuttings emerge.

Mounted to the standard three point linkage 13 of the tractor is a subsoiler frame 14 which is independent of the mower; mounted to the lower part of frame 14 are the two subsoiler tines which are angled back from their conventional orientation the blades extending into the ground at a depth of about twelve inches. The arms 15 mounting the shoes 16 of the tines are formed as angled chutes which receive the chopped mowings and convey them down to the heel of the tine shoe in order to direct the mowings into the slit or trench formed by the tine in use. Additional weights 17 may be mounted on the tine frame 14 to ensure penetration.

Trailing behind the tines are two pairs of concrete rollers 6 which are each inclined at an angle of some five degrees from the vertical. These rollers are adapted to close the slit or trench formed by the tines 5 so that the mowings are completely buried. The rollers are mounted on trailing axles 18 which are journalled in frame 19 pivotally attached to the tine frame 14. The orientation of frame 19 with respect to frame 14 can be adjusted by mechanism 20 so as to raise or lower the penetrating depth of tines 5.

When drawn by the tractor, the flail mower 3 will cut off the remaining stubble and direct the mowings through cowlings 4 into the slit or trench which is continuously being formed by tines 5. If desired the cowlings 4 may include means for injecting a nitrogenous or other rotting catalyst to speed up decomposition. The slit or trench is then closed by the rollers 6, and the stubble mowings are completely buried. The top soil is now ready for cultivation in the normal way without disturbing the rotting mowings left beneath. A seed bed can be prepared immediately and fresh crops sown, since the acetic acid formed by decompsotion of the stubble is well away from the new seed and will not affect their germination.

It will be seen that the invention represents a considerable improvement in stubble disposal and achieves all the benefits outlined earlier in this description. A further substantial benefit however is that land treated by the method or apparatus of the invention to provide a firebreak for an area of stubble burning may thereafter be treated in exactly the same way as the burnt land. This is in contradistinction to the past practice, where firebreaks have been formed by ploughing, which leaves heavy clay soil quite unsuitable for forming a satisfactory seed bed, and the ground is also left unlevel.

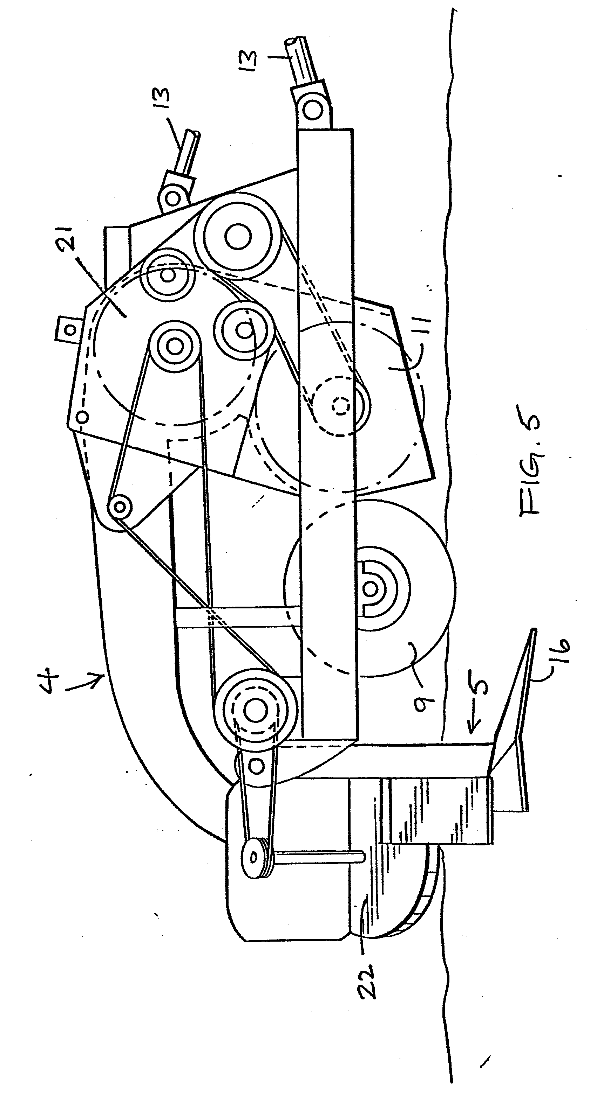

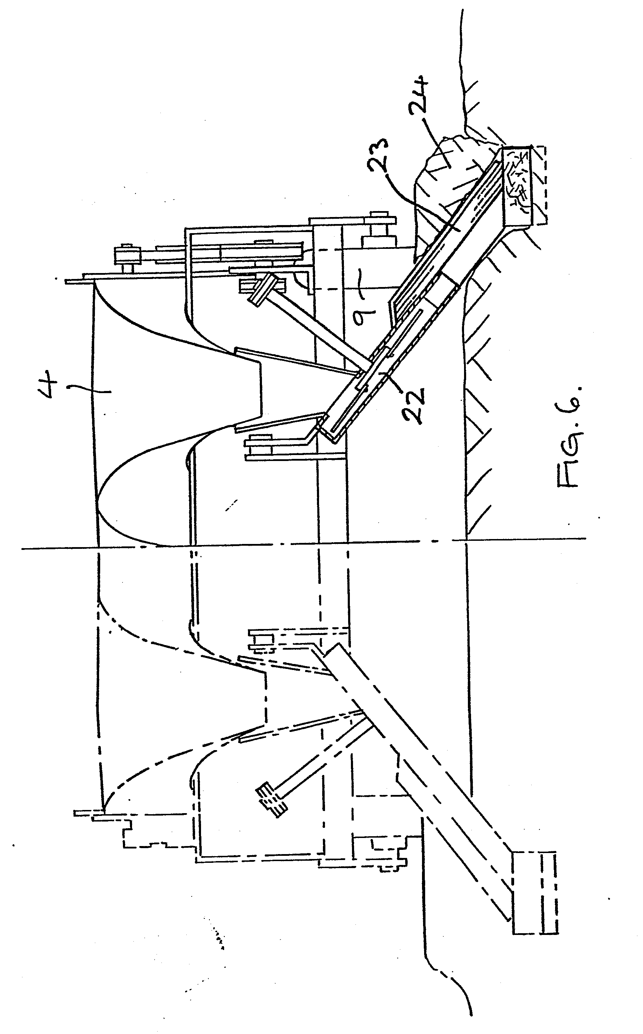

In the modified embodiment shown in Figures 5 and 6 like parts are given like reference numberals. The apparatus is supported on the ground by wheels 9 and the stubble is collected by mower/collector 11 whence it is chopped finely by a frail chopper 21 driven by pulleys and belts from the tractor power take off shaft. The chopped stubble is blown through cowlings 4 to second choppers 22 from which the material is blown into the slits formed by angled tines 23. The wedge of earth 24 lifted to form the slit returns under its own weight and compresses the buried stubble. By using the angled tines a greater amount of stubble may be deposited and less tractor power is required than with a vertical plough.

0149325

CLAIMS

1.  A method of continuously disposing of stubble comprising the steps of collecting the stubble and chopping it continuously forming a slit or trench in the ground, and continuously depositing the chopped stubble in said slit or trench.

2.  Agricultural apparatus comprising a stubble collector, means for chopping the collected stubble, a plough or subsoiling means adapted to form a slit or trench in the ground, and stubble receiving and conveying means adapted to deposit the chopped stubble into said slit or trench.

3.  Apparatus according to Claim 2 wherein the subsoiling means comprises a pair of subsoiling tines disposed at an angle to the vertical to form slits in the ground.

4.  Apparatus according to Claim 2 or 3 wherein the receiving and conveying means comprises one or more housings defining a passageway through which the chopped stubble is air-blown.

5.  Apparatus according to claim 5 in which the or each passageway terminates adjacent the respective plough or subsoiling means providing a vortex flow which delivers the chopped stubble into the slit or trench, the air blowing off in another direction.

FIG.1.

2

1

0149325

FIG.2.

FIG.3.

0149325

FIG.4.

4/6

014 9325

FIG.5

0149325

Fig. 6.

## DOCUMENTS CONSIDERED TO BE RELEVANT

EP 84308336.1

| Category | Citation of document with indication, where appropriate, of relevant passages | Relevant to claim | CLASSIFICATION OF THE APPLICATION (Int. Cl 4) |
|---|---|---|---|
| A | DE - A1 - 2 943 005 (WEICHEL)<br>* Fig. 1; claim 2 *<br>-- | 1-5 | A 01 B 49/04<br>A 01 D 43/12<br>A 01 D 91/00 |
| A | DE - A1 - 2 506 223 (STROPPEL)<br>* Fig. 1-4 *<br>-- | 1-5 | |
| A | DE - A1 - 2 755 676 (WEICHEL)<br>* Fig. 1-7 *<br>-- | 1-5 | |
| A | US - A - 3 745 754 (GRONBERG)<br>* Fig. 1 *<br>---- | 1,2,4,5 | |

| TECHNICAL FIELDS SEARCHED (Int. Cl.4) |
|---|
| A 01 B 49/00 |
| A 01 B 79/00 |
| A 01 D 43/00 |
| A 01 D 91/00 |

The present search report has been drawn up for all claims

| Place of search | Date of completion of the search | Examiner |
|---|---|---|
| VIENNA | 25-03-1985 | SCHWAB |